# EUROPEAN PATENT APPLICATION

(11) **EP 1 193 635 A1**
(43) Date of publication of application: **03.04.2002**
(21) Application number: 01401275.1
(22) Date of filing: 16.05.2001
(51) Int. Cl.: G06F 17/60

(54) **Method for providing a service to a user**

(30) Priority: 02.10.2000 US 677956
(71) Applicant: Tincell Corporation, Burlingame, CA 94010 (US)
(72) Inventor: Brayet, Eric, 91940 Les Ulis (FR)
(74) Representative: Geismar, Thierry

(57) **Abstract**

The invention concerns an apparatus allowing for enhanced verification of user attention to a message, comprising :
an attention verification module (137) delivering a message to a user; the attention verification module verifying the user's attention by challenging the user to repeat a key element of the message ; and,
an application module (136) responsive to the attention verification module, the application module allowing the user access to a service upon positive verification of the user's attention.

## Description

### FIELD OF THE INVENTION

The present invention relates to a method for providing a service to a user and, more particularly, to methods, apparatuses and systems allowing for enhanced verification of a user's attention to a message.

### BACKGROUND OF THE INVENTION

In traditional advertising, mass media (e.g., broadcast radio stations, television networks, cable networks, newspapers, magazines, and the like) develop content targeting various classes of consumers and seek out advertisers to sponsor such content by offering opportunities and other marketing messages with the content. For example, a television or radio program is typically interrupted several times for commercial advertising targeting consumers that are likely to be watching or listening to the particular program. In light of the expense of reaching consumers, advertisers are often concerned about whether their advertisements are actually reaching consumers and whether such advertisements are effective. However, the delivery methods of traditional media creates difficulties for advertisers who wish to verify that their advertising and marketing messages are reaching their respective target consumers, since there is no efficient or simple method of obtaining feedback from consumers. Indeed, traditional advertising and broadcast services employ statistical sampling methods for estimating what ads have got to what people. Such methods, however, provide no indication of whether consumers actually viewed or paid attention to an advertisement, let alone, whether they retained key or important elements of the advertisement.

Interactive media, such as the Internet-and telecommunications-based systems, also offer content or services in an effort to attract consumers and deliver advertisements and other marketing messages to them. Unlike traditional broadcast media, the interactive nature of such media allow opportunities to accurately track the numbers of consumers that have received a particular advertisement. However, such interactive media have employed primitive attempts to track and verify whether a consumer has received and paid attention to a particular advertising or marketing message. For example, U.S. 5, 970, 124 issued to Csaszar et al. Discloses an interactive voice response system that offers users desired information after transmitting an advertising or marketing message. U.S. 4, 996, 705 issued to Entenmann et al. Discloses a lottery conducted over a telecommunications system.

In one form, users dial into a lottery administration system including an interactive voice response or DTMF system that presents the users with the opportunity to enter the lottery in exchange for listening to an advertisement. According to the system, if the user is still connected at the end of the advertisement, he or he is presented with the option to enter the lottery. In addition, U.S. 6, 009, 150 issued to Kamel discloses a telecommunications system for delivering promotional messages to end-users. According to the invention, the user selects a quantity of advertising messages and earns a corresponding allotment of free calling after listening to the advertising messages.

Moreover, some interactive media employ basic levels of interactivity to verify a user's attention to a particular advertisement or marketing message. U.S. 4, 850, 007 issued to Marino et al. Discloses a telephone toll service system that includes advertising to reduce or eliminate charges to the consumer. According to the 007 patent, a user dials into the system and specifies the desired service (e.g, to call, weather, directory assistance, etc.).

Before the user is connected to the service, an ad is presented to the user. During the advertising period, the user is prompted to respond to intermittent queries, such as dialing a number on the key pad of his telephone. After the ad, the user is connected to the service at a reduced rate. In addition, U.S. 5, 794, 007 issued to Goldhaber et al. Discloses methods and systems for delivering "negatively priced" information (i.e., advertisements) to consumers. According to the disclosed system, a consumer logs onto an attention brokerage service, listens to or views an advertisement, and receives some form of compensation. Furthermore, the 210 patent teaches the use of interactivity to require the user to respond to or interact with the ad to ensure that the user has paid attention to it. In one form, the consumer is compensated in credits ("CyberCoins") that can be used to purchase various forms of content available over the network, such as news, music, etc. While the methods and systems are the prior art fulfill their respective objectives, such methods and systems have only scratched the surface of the realm of possibilities and have not taken full advantage of the characteristics of interactive advertising systems. For example, such prior art systems do not allow for any indication of whether the targeted consumer has paid attention to key elements of a particular advertising or marketing message.

### SUMMARY OF THE INVENTION

The present invention provides methods, apparatuses and systems allowing for verification of a user's attention to a key element in a message targeted to the user.

While the methods and systems of the prior art provide basic or limited indications of whether users have paid at least minimal attention to messages, the present invention, in some embodiments, allows for enhanced verification of a user's attention. In one embodiment, the present invention enhances the effectiveness of a particular message as it relates to a user's retention of at least one key element of the message. In one embodiment, the present invention challenges the user to repeat a key element of the message to provide senders of the message with an enhanced level of assurance that the user has paid attention to the key element. In another embodiment, the present invention optimises the motivation level of users to listen to messages and verify their attention to them.

According to the invention, a key element can be any desired element of a message, such as brand name, company name, a slogan, and a logo. Furthermore, the present invention has application in connection with a wide variety of services, such as lotteries and other games, search engines, entertainment services, and information services (e.g., weather, traffic, news). In addition, as described below, the present invention has application to a variety of interactive media, including interactive computer networks, such as the Internet, as well as systems involving telecommunications networks.

### DESCRIPTION OF THE DRAWINGS

Figure 1 is a functional block diagram illustrating an embodiment of the present invention operating in connection with a telecommunications network.
Figure 2 is a flow chart diagram illustrating a method according to one embodiment of the present invention.
Figure 3 is a functional block diagram setting forth a second embodiment of the present invention operating in a computer network environment.
Figure 4 is a flow chart diagram illustrating a method according to one embodiment of the present invention.

### DESCRIPTION OF PREFERRED EMBODIMENT(S)

### A. Lottery Game System

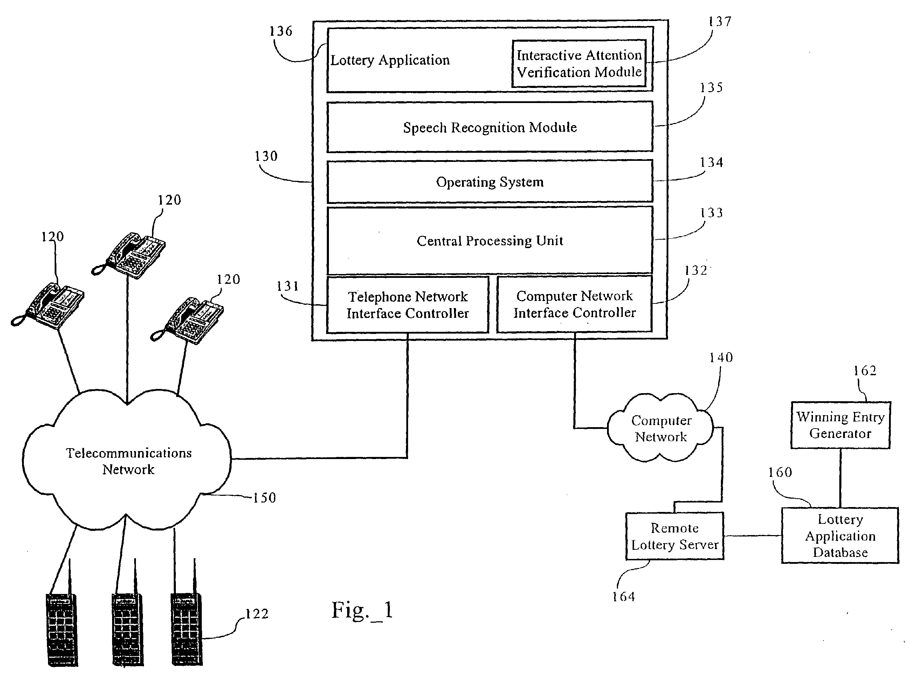

Figure 1 illustrates an embodiment of the present invention involving a lottery game that users access over a telecommunications network. In one embodiment, the present invention operates in an environment comprising lottery application server 130, computer network 140, telecommunications network 150, lottery application database 160, and telephones 120 and/or wireless or cellular telephones 122. Computer network 140 can be any suitable computer network, including an open, wide-area network, such as the Internet, or a local area network. In addition, computer network 140 can comprise an electronic network, an optical network, a wireless network, and/or a combination thereof.

Telecommunications network 150 can comprise an electronic network, a fibre optic network, a wireless network, and/or a combination thereof.

Lottery application server 130, in one embodiment, includes functionality allowing for processing and validating lottery game entries. In one embodiment, lottery application server also includes speech recognition functionality providing, at least in part, a voice-controlled user interface. In the embodiment, shown, lottery application server 130 also includes functionality directed to presenting advertising messages to users and verifying user attention to the advertising messages.

As figure 1 shows, lottery application server 130 is operably connected to computer network 140 and telecommunications network 150. In one embodiment, lottery application server 130 comprises telephone network interface controller 131, computer network interface controller 132, central processing unit 133, operating system 134, speech recognition module 135, lottery application module 136, and interactive attention verification module 137. Telephone network interface controller 131 allows for communication of data over telecommunications network 160 between lottery application server 130 and telephones 120 and/or wireless telephones 122. Computer network interface controller 132 allows for communication of data between lottery application server 130 and lottery application database 160 over computer network 140. Lottery application module 136 processes lottery game entries and, in one embodiment, validates lottery game entries in conjunction with interactive attention verification module 137. Interactive attention verification module 137 transmits advertisements to users and, as discussed below, verifies user attention to the advertisements. In one embodiment, interactive attention verification module 137 comprises a database including a plurality of advertisements. In one form, interactive attention verification module 137 selects an advertisement from the database according to a random or predetermined sequence.

In another embodiment, interactive attention verification module 137 matches an advertisement to a user based on the respective characteristics of the advertisements and data associated with the user.

In one embodiment, lottery application server 1630 further includes automatic number identification (ANI) functionality, allowing lottery application server 130 to identify the phone numbers associated with incoming calls. In addition, although Figure 1 shows only one lottery application server 130, a plurality of lottery application servers may operate concurrently in order to support a larger volume of simultaneous calls.

Remote lottery server 164 includes functionality providing a lottery game. In one embodiment, remote lottery server 164 receives game entries from lottery application server 130 and stores them in lottery application database 160. Lottery application database 160, in one embodiment, stores data facilitating operation of the lottery game.

In one embodiment, lottery application database 160 includes previously played numbers stored in association with user identifications. In one embodiment, user identifications comprise telephone numbers associated with incoming calls. In another embodiment, user identifications comprise user names or other identifications provided by users during a log in procedure. In one embodiment, users, whether they are identified by their phone number as resolved by an ANI system, or by an explicitly provided user name or account identification are also required to provide a password associated with the user identification.

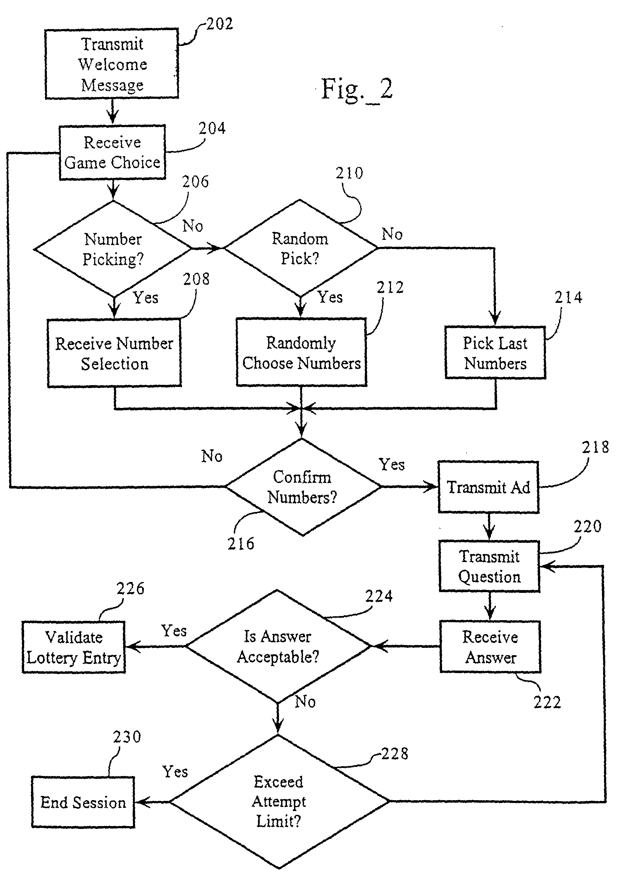

Figure 2 illustrates a method for verifying user attention for an advertisement transmitted to users in connection with a lottery game. In one embodiment, users at telephone 120 or wireless telephone 122 access lottery application server 130 over telecommunications network 150 by dialing a telephone number assigned to lottery application server 130. Upon receipt of the incoming call, lottery application server 130 picks up the call and, in one embodiment, transmits a welcome message to the user (Figure 2, step 202). In one embodiment, the welcome message explains that three options exist for playing the lottery game. In one embodiment, users are also prompted to log in to the system by providing a user identification and, in some embodiments, a password. In another embodiment, users are identified by an ANI system that detects the phone number corresponding to the incoming call. In some embodiments, users are identified by their phone numbers as resolved by an ANI system; however, they must also provide a password to login and gain access to the system.

According to one embodiment, a user may opt to:
a) Manually select numbers (see Figure 2, steps 206 and 208),
b) Have lottery application server 130 randomly select the numbers (see steps 210 and 212), or
c) Use numbers previously played by the user (see step 214).

Accordingly, lottery application server 130 receives the users game choice (step 204).
In one embodiment, the user inputs the game choice by pressing a key on the number pad of the telephone accessing the server 130. In this embodiment, lottery application server 130 includes a DTMF receiver that detects the tone and resolves the number or character associated with the tone. In another embodiment, users input their selection be speaking their selection. In this embodiment, speech recognition module 135 detects and resolves the users speech in the signal transmitted to lottery application server 130.

If the user opts to select a new set of numbers (Figure 2, step 206), lottery application server 130 prompts the user for and receives the new numbers. In one embodiment, a lottery entry comprises a set of numbers in a predetermined range (e.g. 1 to 50, 1 to 100, 1 to 200, etc.). As above, in one embodiment, the numbers by manually entering them using number entry key or by speaking the numbers. If the user opts for a randomly generated set of numbers (Figure 2, step 210), lottery application server 130 randomly chooses the numbers. In another embodiment, random selection of numbers occurs remotely from lottery application server 130. In one embodiment, remote lottery server 164 generates the set of numbers and transmits them to lottery application server 130 for the user to confirm. Lastly, if the user opts to play previously picked numbers, lottery application server 130 accesses lottery application database 160 and retrieves the numbers, if any, associated with the current user identification which, depending on the embodiment, is either provided by the user during a login or is the phone number resolved by an ANI system. In one embodiment, lottery application server 130 repeats the numbers the user has identified and asks the user to confirm them (Figure 2, step 216). If the user does not confirm the numbers, lottery application server 130 prompts the user provide a new game choice(see step 204).

If the user confirms the numbers, interactive attention verification module 137 transmits an advertisements to the user (Figure 2, step 218). Interactive attention verification module 137 then interacts with the user to verify the user's attention to the advertisement.
In one embodiment, interactive attention verification module 137 transmits a question related to the advertisement (step 220) and receives an answer from the user (step 222).
Interactive attention verification module 137 determines whether the answer provided by the user is acceptable (step 224). If the answer provided by the user is unacceptable, lottery application server 130, in one embodiment, prompts the user for the answer until an attempt limit is exceeded (see Figure 2, steps 228 and 230). If the answer is acceptable, lottery application server 130 validates the user's game entry (step 226) and, in one embodiment, stores the game entry in lottery application database 160 in association with the user's identification.

In one embodiment, winning entry selector 162, on a periodic basis (e.g., daily, weekly, monthly, etc.) randomly selects in the predetermined range to generate the winning entry numbers and compares the winning entry numbers to the lottery entries stored in lottery application database 160.
In one embodiment, if a winning entry is found in lottery application database 160, winning entry selector 160 retrieves the user identification (e.g., a telephone number). The user identification can then be used to notify the winner, if any, for the lottery period. In another embodiment, the winning numbers have been selected before the user calls in. In such an embodiment, the user can be notified in the same call whether he or she has submitted a winning game entry.

In one embodiment, the sequence of steps set forth above enhances a user's motivation or incentive to pay attention to the advertisement and complete the entire process. Specifically, as set forth above, users access the lottery application server and log in to the system and/or create a lottery game entry.

However, since lottery application server 130 does not validate the game entry until after the user's attention has been verified, the user has more of an incentive to listen to the advertisement and validate the game entry in light of the time he or she invested in logging in and/or creating the game entry. In addition, in one embodiment, the interactivity integrated into the system verifies that the user has paid attention a key element of the advertisement. In one embodiment, the question transmitted to the user relates to a key element of the advertisement (e.g., a brand name, company name, or slogan). In one embodiment, to provide the answer to the question, the user must repeat the key element of the advertisement. For example, the advertisement transmitted to the user may comprise a short advertising message (such, as a jingle) for BUDWEISER beer. After the ad has finished, the user is asked "So, what beer do you want to drink?" The answer to the question causes the user to repeat a key element of the advertisement - i.e., the brand name BUDWEISER;

Moreover, in one embodiment, interactive attention verification module 137 includes so-called "barge-in" functionality. According to one embodiment, the advertising message provided to the user stops playing as soon as the user speaks. For example, if the user speaks during the advertising message described above, interactive attention verification module 137 stops playing the advertisement and determines whether the user's answer is acceptable. For instance, if the user says "Budweiser" during the advertising message of the above-provided example, attention verification module 137 stops playing the advertisement and allows the user to receive the requested service. In one embodiment, interactive attention verification module 137 logs statistics relating to the frequency at which users "barged in" to provide advertisers an indication of how well a group of users recognises a particular advertising message.

### B. Other embodiments of the invention

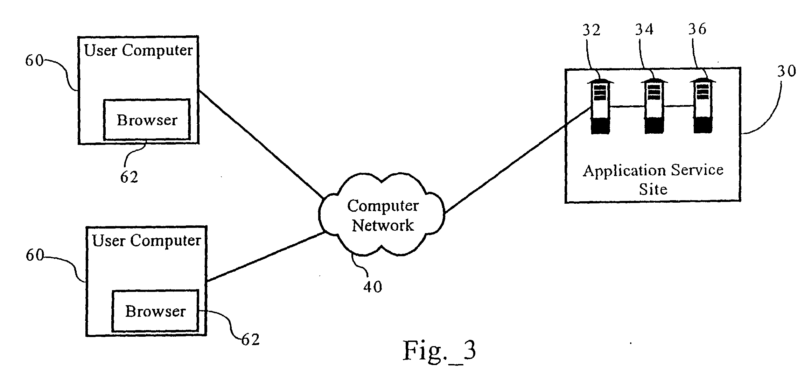

As Figure 3 demonstrates, the present invention also has application to web sites offering content and other services to users over a wide-area computer network 40, such as the Internet. Computer network 40 can be any suitable computer network, including an open, wide-area network. In addition, computer network 40 can comprise an electronic network, an optical network, a wireless network, and/or a combination thereof. Computer network 40 can also comprise a two-way cable network, an interactive TV or radio network, a satellite network, a telephone network, or any combination thereof. As Figure 3 shows, one embodiment of the present invention operates in a computer network environment comprising application service site 30, and at least one network access device, such as a computer 60, associated with one or more users.

In addition, although the attention verification functionality is described as an integrated part of an application service site 30, the functionality described herein can be distributed among a plurality of computing devices and/or web sites. For example, the attention verification functionality described herein can reside on a server separate from the service provider sites or servers providing services requested by users. In one embodiment, the attention verification functionality can be called by the service provider sites using application programming interfaces presented by attention verification server.

Application service site 30 provides content and/or services to users over computer network 40. For example, application service site 30 can provide information services, such as news, weather, and stock market forecasts. Application service site 30 can also provide other services to users, such as product support, search engines, lotteries, etc.

Application service site 30 can also be an entertainment services provider, such as an interactive television provider operating for example, on a two-way cable network. In one embodiment, application service site 30 is a web site comprising web server 32, application server 34 and database server 36. Web server 32 receives requests for files or other data over computer network 40 and passes them to application server 34. In one embodiment, web server 32 transmits data user and other sites using the SSL ("Secure Sockets Layer") encryption protocol, the S-HTTP ("Secure HTTP") protocol, or any other similar protocol for transmitting confidential or private information over an open computer network. In one embodiment, database server 36 stores content and other data relating to the operation of the site. Application server 34, according to one embodiment, accesses databases server 36 and generates pages or other files that web server 32 transmits over computer network 40 to the intended recipient.

Users access sites and services on computer network 40 with network access devices 60, respectively, which receive, display and transmit data over a computer network. In one embodiment, a network access device is a browser 62 executed on a personal computer 60, a browser executed on a network computer, a browser on a cell phone or personal digital assistant, or a voice response unit on a telephone. In another embodiment, a network access device can also comprise an Internet appliance, or a web or interactive television or radio appliance.

One embodiment of present invention is implemented using page-based interfaces transmitted to user computer 60 having a browser 62 and a connection to computer network 40. User computer 60 can be any computer, special-purpose computing device, or any other suitable device for performing the required functionality. In one embodiment, user computer 60 includes at least one processor, a data storage system (including volatile and non-volatile media), a key-board, a display, at least one input device and at least one output device. In one embodiment, the user's computer is connected to the Internet via a modem dial-up connection or through a network line. Such communication, however, could also be wireless. In addition, although embodiments of the system are described as working in conjunction with a browser, any suitable device or application for receiving, displaying and transmitting data over a computer network can be used in the present invention. In one embodiment, the browser 62 implemented on client computer 60 supports the SSL ("Secure Sockets Layer") protocol, the S-HTTP ("Secure HTTP) protocol, or any other similar protocol for transmitting confidential or private information over an open computer network.

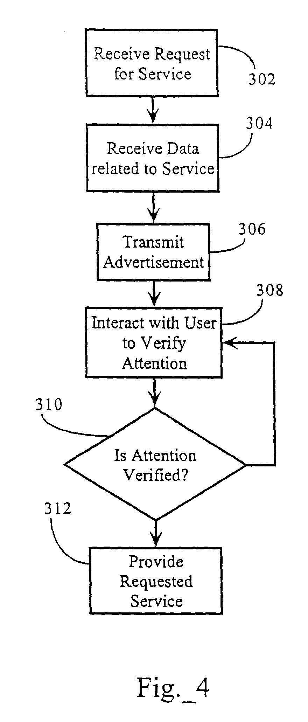

Figure 4 illustrates a method for verifying user attention to an advertisement according to one embodiment of the present invention. In one embodiment, application service site 30 receives a request from a user at user computer 60 (Figure 4, step 302). In response to the request, application service site 30 queries the user for data related to or necessary to provide the requested service (step 304). Before providing the service, application service site 30 transmits an advertisement to the user (step 306) and interacts with the user to verify the user's attention to the advertisement (step 308). If the user's attention is verified (step 310), application service site 30 provides the requested service to the user (step 312).

In one embodiment, application service site 30 offers searching functionality to users in exchange for their demonstrated attention to an advertisement. For example, a user, at client computer 60, accesses application service site 30 over computer network 40 to request a search. In response to the request, application service site 30, in one embodiment, transmits a page-based form that prompts the user for keywords to be used in the search. The user then transmits the completed form to application service site 30 (Figure 4, step 304). Before providing the results of the search to the user, application service site 30 transmits an advertisement to the user (Figure 4, step 306) and interacts with the user to verify the user's attention (Figure 4, step 308). In one embodiment, application service site 30 verifies the user's attention by transmitting a form including a question related to a key element in the advertisement. According to this embodiment, the user inputs the answer to the question in a provided field and transmits the completed form to application service site 30. Application service site 30 verifies the user's attention (step 310), in one embodiment, by determining whether the answer provided by the user is acceptable. If so, application service site 30 provides the results of the search (step 312).

## Claims

1. A method for providing a service to a user over a network, the method comprising the steps of:
**a)** receiving over the network a request for a service from said user;
**b)** transmitting a message to the user;
**c)** requiring the user to answer a question related to a key element of the message ; and,
**d)** providing the requested service, if the user successfully answers the question.

2. The method of claim 1, wherein the answer to the question involves repeating said key element.

3. The method of claim 1 or 2 wherein the service comprises a lottery game.

4. The method of claim 1 or 2 wherein the service comprises a search engine.

5. The method of any of claims 1 to 4 wherein the key element is a brand name.

6. The method of any of claims 1 to 4 wherein the key element is a slogan.

7. The method of any of claims 1 to 4 wherein the key element is a company name.

8. The method of any of claims 1 to 7 wherein the network is a voice-based telecommunications network

9. The method of any of claims 1 to 8 wherein the network is a computer network.

10. The method of any of claims 1 to 9 wherein said message is a message.

11. A method for validating a game entry based on demonstrated user attention, the method comprising the steps of :
**a)** receiving from a user a request to enter a game ;
**b)** generating a game entry ;
**c)** transmitting a message to the user;
**d)** requiring the user to repeat a key element of the message transmitted in step (c) ; and,
**e)** validating the game entry generated in step (b), if the user repeats the key element.

12. The method of claim 11 wherein the requiring step (d) comprises the step of (d1) challenging the user to answer a question related to a key element of the message ; wherein the answer to the question requires the user to repeat the key element of the message.

13. The method of any of claim 11 or 12 wherein the key element is a brand name.

14. The method of any of claim 11 or 12 wherein the key element is a slogan.

15. The method of any of claim 11 or 12 wherein the key element is a company name.

16. An apparatus allowing for enhanced verification of user attention to a message, comprising :
an attention verification module delivering a message to a user; the attention verification module verifying the user's attention by challenging the user to repeat a key element of the message ; and,
an application module responsive to the attention verification module, the application module allowing the user access to a service upon positive verification of the user's attention.

17. The apparatus of claim 16 wherein the application module provides a requested service upon positive verification of the user's attention.

18. The apparatus of claim 17 wherein the application module validates a game entry upon a positive verification of the user's attention.

19. The apparatus of claim 16 wherein the attention verification module challenges the user to answer a question related to a key element of the advertising message.

20. The apparatus of claim 19 wherein the answer to the question requires the user to repeat the key element of the advertising message.

21. The apparatus of any of claims 16 to 20 wherein the attention verification module includes barge-in functionality causing the message to stop playing when the user transmits a response.

22. The apparatus of claim 20 wherein the attention verification module logs the number of times users interrupts the message by transmitting a response during the message.

23. An apparatus allowing for enhanced verification of user attention to a message transmitted over a network, the network including at least one network access device associated with a user, comprising :
an attention verification module comprising a module delivering a message to an user, and a speech recognition module verifying the user's attention by challenging the user to repeat a key element of the message ; the attention verification module comparing the speech data detected by the speech recognition module to a predetermined set of speech data corresponding to the question ; and,
a game module responsive to the attention verification module, the game module validating a game entry upon a positive verification of the user's attention.

24. The apparatus of claim 23 wherein the attention verification module challenges the user to answer.

25. The apparatus of claim 24 wherein the answer to the question requires the user to repeat the key element of the message.

26. A system for validating a game entry based on demonstrated user attention, comprising
a game server, the game server comprising
an attention verification module, the attention verification module delivering a message to a user and challenging the user to repeat a key element of the message, and
a game module responsive to the attention verification module, the game module validating a game entry upon a positive verification of the user's attention ;
a game application database operably connected to the game server; and,
a network access device by which an user accesses the game server.

27. The system of claim 26 wherein the attention verification module challenges the user to answer a question related to a key element of the message.

28. The apparatus of claim 27 wherein the answer to the question requires the user to repeat the key element of the message.

29. A method for providing a service to an user, the method comprising the steps of:
**a)** receiving a request for a service from said user;
**b)** querying and receiving from the user data related to the service requested by the user;
**c)** transmitting a message to the user;
**d)** interacting with the user to verify the user's attention to the message ;
**e)** providing the requested service to the user, if the user's attention is verified.

30. The method of claim 29 wherein said interacting step (d) comprises the step of
(d1) challenging the user to repeat a key element of the advertising message.

31. The method of any of claim 29 or 30 wherein said interacting step (d) comprises the steps of
(d1) transmitting a question related to a key element of the message, wherein the answer to the question requires the user to repeat the key element
(d2) receiving an answer to the question from the user; and,
(d3) determining whether the answer received in step (d2) is acceptable.
